# FASCICULE DE BREVET EUROPEEN

(11) **EP 3 252 368 B1**
(45) Date de publication et mention de la délivrance du brevet: **02.09.2020**
(21) Numéro de dépôt: 17172317.4
(22) Date de dépôt: 22.05.2017
(51) Int. Cl.: F21S 43/14, F21S 43/237, F21S 43/241, F21S 43/245, F21V 8/00

(54) **DISPOSITIF LUMINEUX, NOTAMMENT POUR VÉHICULE AUTOMOBILE, ET UNITÉ D'ÉCLAIRAGE ET/OU SIGNALISATION COMPRENANT UN TEL DISPOSITIF LUMINEUX**
LEUCHTVORRICHTUNG, INSBESONDERE FÜR EIN KRAFTFAHRZEUG, UND BELEUCHTUNGS- UND/ODER SIGNALVORRICHTUNG, DIE EINE SOLCHE LEUCHTVORRICHTUNG UMFASST
LIGHTING DEVICE, IN PARTICULAR FOR A MOTOR VEHICLE, AND LIGHTING AND/OR SIGNALLING UNIT COMPRISING SUCH A LIGHTING DEVICE

(30) Priorité: 31.05.2016 FR 1654924
(43) Date de publication de la demande: 06.12.2017
(73) Titulaire: VALEO ILUMINACION, 23600 Martos (ES)
(72) Inventeur: MARTINEZ, Juan Manuel, 23600 MARTOS (ES); FERNANDEZ, Ricardo, 23600 MARTOS (ES); ROMO, Jesus, 23600 MARTOS (ES); LOPEZ, Jesus, 23600 Martos (ES)
(74) Mandataire: Schaffner, Jean

(56) Documents cités:
- EP-A1- 2 020 610
- EP-A1- 2 620 790
- US-A1- 2007 159 846

## Description

L'invention concerne un dispositif lumineux et une unité d'éclairage et/ ou signalisation comprenant un tel dispositif lumineux. La présente invention est en particulier destinée à équiper des véhicules automobiles.

Dans ce domaine, il est connu d'utiliser des dispositifs lumineux munis d'une source lumineuse, en général une diode électroluminescente, et un guide de lumière à travers lequel se propage un faisceau lumineux issu de ladite source. La lumière se propage au sein du guide par réflexion totale interne. La lumière est extraite vers l'extérieur par des moyens de réflexion disposés à la surface du guide. En plus d'une fonction de signalisation, ces dispositifs permettent d'améliorer l'aspect esthétique d'un véhicule.

On connaît des dispositifs lumineux comprenant deux guides de lumière reliés à une source lumineuse, au niveau d'une zone de jonction desdits guides de lumière. Ces guides de lumière divergent l'un de l'autre de manière à former deux branches distinctes, toutes deux émettrices de lumière. Autrement dit, le dispositif lumineux prend alors la forme d'un Y dont les deux branches sont illuminées.

Le document US 2007/159846 décrit un dispositif comprenant un guide de lumière avec une portion circulaire qui forme une bague fermée et une portion d'entrée de lumière en saillie de la portion circulaire dans laquelle une source de lumière émet de la lumière. Les documents EP 2 020 610 A1 et EP 2 620 790 A1 décrivent d'autres guides de lumière connus.

Afin d'améliorer l'esthétique de ce type de dispositifs lumineux, il est connu encore d'utiliser un corps intermédiaire permettant de modifier l'aspect allumé du dispositif lumineux. Le corps intermédiaire, dont une partie est apte à émettre de la lumière, est conçu pour être rapporté entre les deux branches du dispositif de manière à ce que la partie émettrice du dispositif lumineux prennent non plus la forme d'un Y mais celle d'un unique guide linéaire en forme de C. Cette forme en C est généralement plus appréciée des utilisateurs.

Un des inconvénients de ces dispositifs est qu'ils comprennent des portions, notamment deux, non émettrices de lumière au niveau des surfaces de contact entre le corps intermédiaire et les branches émettrices. Autrement dit, l'émission de lumière le long du C est discontinue, ce qui crée des zones d'ombres et altère le rendu visuel dudit dispositif. Il existe donc un besoin d'améliorer le rendu lumineux de ces dispositifs.

L'un des objectifs de l'invention est de résoudre l'inconvénient cité ci-avant. Pour cela, l'invention propose un dispositif lumineux, notamment pour véhicule automobile, comprenant un guide de lumière, le guide de lumière comprenant un premier élément, dit branche principale, et un deuxième élément, dit branche intermédiaire, la branche principale comprenant deux extrémités libres et s'étendant longitudinalement d'une extrémité libre à l'autre, la branche intermédiaire s'étendant entre deux zones de la branche principale, dites zones de liaison, les zones de liaison étant à distance l'une de l'autre et distinctes des extrémités libres de la branche principale, la branche intermédiaire étant jointe en continuité de matière à l'une et l'autre des zones de liaison, le dispositif comprenant en outre un raccord émetteur de lumière, le raccord émetteur de lumière étant destiné à être agencé entre deux zones de la branche principale, dites zones de raccordement, le raccord émetteur de lumière étant conçu pour s'étendre de l'une des zones de raccordement à l'autre zone de raccordement, les zones de raccordement étant à distance l'une de l'autre et distinctes des extrémités libres de la branche principale, le raccord émetteur de lumière étant conçu pour être alimenté en lumière par la branche intermédiaire, le raccord émetteur de lumière étant conçu pour être emboîté au guide de lumière.

Ainsi, l'utilisation d'un unique guide de lumière comprenant une branche principale dont deux zones sont reliées par une branche intermédiaire permet d'offrir une partie émettrice de lumière donnant l'impression de suivre un contour fermé, par exemple à la manière d'un O, et dépourvue de défaut d'illumination.

Selon différents modes de réalisation de l'invention, qui pourront être pris ensemble ou séparément :
- la branche principale est linéaire,
- le nombre d'extrémités libres du guide de lumière est égal à deux,
- la branche intermédiaire et la branche principale sont issues de moulage,
- la branche principale est conçue pour alimenter en lumière la branche intermédiaire,
- la branche intermédiaire comprend une surface d'émission et des motifs de réflexion,
- les motifs de réflexion sont disposés en relief à la surface d'émission de la branche intermédiaire,
- le guide de lumière est conçu pour être alimenté en lumière par au moins une source de lumière,
- la au moins une source de lumière est agencée au niveau de l'une au moins des extrémités libres de la branche principale,
- le raccord émetteur de lumière est linéaire,
- la branche intermédiaire et le raccord émetteur de lumière s'étendent sensiblement parallèlement l'un à l'autre,
- les zones de raccordement sont situées toutes deux entre les deux zones de liaison le long de la branche principale,
- la branche intermédiaire et le raccord émetteur de lumière sont séparés l'un de l'autre par un espace,
- une partie de la branche principale s'étendant de l'une des zones de raccordement à l'autre zone de raccordement, dite zone d'émission, et le raccord émetteur de lumière définissent ensemble une boucle fermée,
- la boucle fermée s'étend sensiblement dans un plan P,
- deux parties de la branche principale s'étendent entre chacune des extrémités libres de la branche principale et la branche intermédiaire, dites portions d'extrémité, de manière sécante au plan P.

L'invention concerne encore une unité d'éclairage et/ou signalisation comprenant un tel dispositif lumineux.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés :
- La figure 1 est une vue de face, en perspective, d'un guide de lumière du dispositif lumineux selon l'invention.
- La figure 2 est une vue de face, en perspective, d'une partie du guide de lumière selon l'invention.
- La figure 3 est une vue de face, en perspective, d'une partie du dispositif lumineux selon l'invention.
- La figure 4 est une vue de derrière, en perspective, d'un raccord émetteur de lumière du dispositif lumineux selon l'invention.
- La figure 5 est une vue de dessus d'une partie du dispositif lumineux selon l'invention.
- La figure 6 est un agrandissement d'une partie de la figure 5.

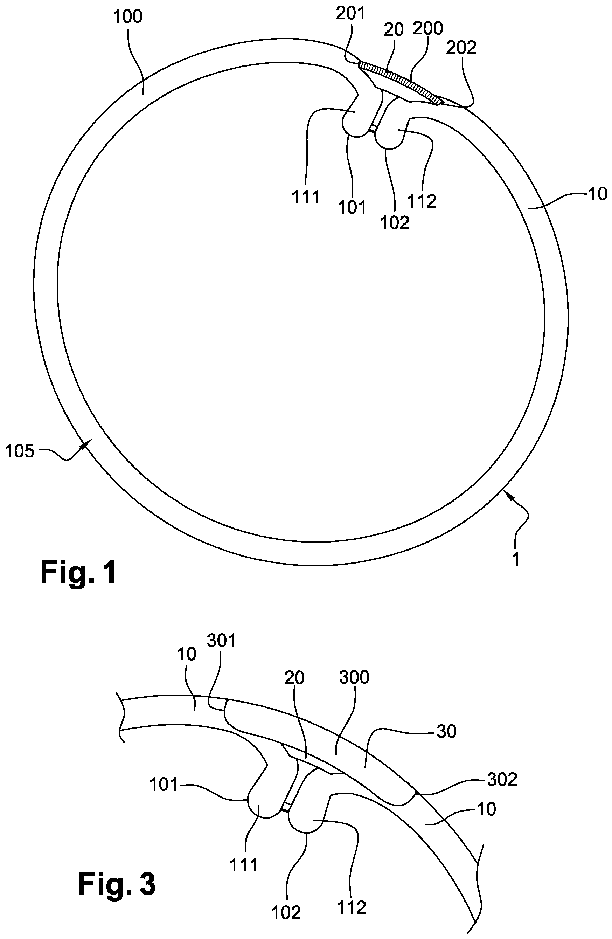

Comme illustré à la figure 1, l'invention concerne un dispositif lumineux, notamment pour véhicule automobile, comprenant un guide de lumière 1. Le guide de lumière 1 comprend lui-même un premier élément, dit branche principale ou corps principal 10, et un deuxième élément, dit branche intermédiaire ou branche de liaison 20.

Le dispositif lumineux est configuré de sorte que la branche intermédiaire 20 soit alimentée en lumière, et donc en faisceaux lumineux, à partir de la branche principale 10.

Le guide de lumière est ici monobloc. Avantageusement, la branche intermédiaire 10 est issue de moulage avec la branche principale 20. Le matériau dont est issu le guide de lumière 1 est avantageusement choisi de manière à favoriser la propagation de faisceaux lumineux à l'intérieur du guide de lumière 1.

En particulier, le guide de lumière 1 étant monobloc et issu d'un seul et même matériau, la propagation des faisceaux lumineux à l'intérieur de la branche principale 10 et de la branche intermédiaire 20 peut se faire sans rencontrer d'obstacle, de séparation ou de discontinuité physique qui pourraient nuire à la propagation des faisceaux lumineux. Autrement dit, le guide de lumière 1 est conçu de manière à constituer un milieu uniforme favorisant la propagation des faisceaux lumineux. Encore autrement dit, le guide de lumière 1 est conçu pour permettre la propagation de faisceaux lumineux par réflexion totale à travers la matière du guide de lumière 1. Ainsi, le guide de lumière 1 est conçu de manière à permettre la propagation des faisceaux lumineux par réflexions successives, également appelées réflexions internes, des faisceaux lumineux.

La branche principale 10 est ici linéaire. Avantageusement, la branche principale 10 est de forme allongée et de section droite sensiblement circulaire. Elle comprend deux extrémités libres 101, 102 et s'étend longitudinalement d'une extrémité libre 101, 102 à l'autre extrémité libre 101, 102 selon une direction principale d'extension longitudinale. Ici, la direction principale d'extension longitudinale de la branche principale 10 est incurvée sur une majeure partie de sa longueur et/ou rectiligne par endroit, en particulier aux extrémités.

La branche principale 10 du guide de lumière 1 est configurée de manière à permettre la propagation de la lumière en son sein, c'est-à-dire dans un volume intérieur de la branche principale 10.

Ici, le dispositif lumineux est conçu de sorte que la propagation d'au moins une partie des faisceaux lumineux à l'intérieur de la branche principale 10 se fasse selon une direction générale de propagation sensiblement parallèle à la direction principale d'extension longitudinale de la branche principale 10.

La branche principale 10 est configurée de manière à permettre, de plus, l'émission des faisceaux lumineux depuis le volume intérieur de la branche principale 10 vers un espace extérieur à celle-ci, depuis au moins une portion de la branche principale 10, dite portion émettrice 105, configurée à cette fin. Ici, la portion émettrice 105 s'étend selon une boucle ouverte.

La branche principale 10 présente ici une surface latérale 100 qui s'étend d'une extrémité libre 101, 102 de la branche principale 10 à l'autre. La surface latérale 100 constitue une frontière entre le volume intérieur de la branche principale 10 et l'extérieur. En particulier, la branche principale 10 est conçue de sorte que les faisceaux lumineux puissent se réfléchir contre la surface latérale 100 pour se propager dans la branche principale 10, sauf au niveau de la zone d'émission 105 où une partie au moins des faisceaux lumineux peut sortir de l'intérieur de la branche principale 10 vers l'extérieur.

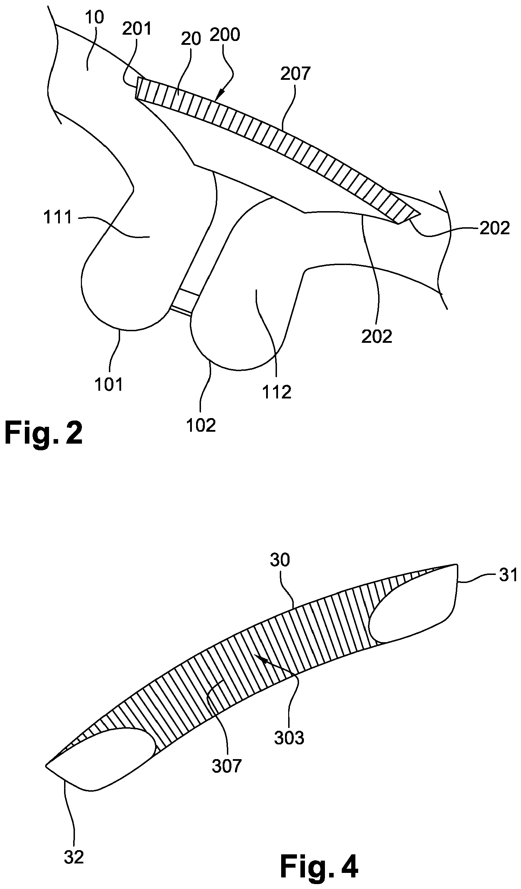

Comme illustré en particulier à la figure 2, la branche intermédiaire 20 s'étend, elle, longitudinalement entre deux zones 201, 202 de la branche principale 10, dites zones de liaison. Autrement dit, la branche intermédiaire 20 comprend deux extrémités confondues respectivement avec l'une et l'autre des zones de liaison 201, 202 de la branche principale 10. Les zones de liaison 201, 202 sont situées à distance l'une de l'autre. Elles sont de plus toutes deux distinctes des extrémités libres 101, 102 de la branche principale 10.

La branche intermédiaire 20 est agencée à proximité des extrémités libres 101, 102 de la branche principale 10.

Les zones de liaison 201, 202, et donc les extrémités de la branche intermédiaire 20, sont situées au niveau de la surface latérale 100 de la branche principale 10. Les zones de liaison 201, 202 correspondent ici chacune à une jonction entre la branche intermédiaire 20 et la branche principale 10. En d'autres termes, la branche intermédiaire 20 et la branche principale 10 sont ici jointes en continuité de matière au niveau des zones de liaison 201, 202. Autrement dit, la branche intermédiaire 20 est ici un pont de matière entre deux parties distinctes de la branche principale 10. De cette manière, la propagation des faisceaux lumineux est favorisée entre la branche principale 10 et la branche intermédiaire 20.

En outre, la branche intermédiaire 20 est également conçue pour émettre des faisceaux lumineux entre un volume intérieur de la branche intermédiaire 20 et un espace extérieur à celle-ci. A cette fin, la branche intermédiaire 20 est munie d'une surface d'émission 200 conçue pour permettre l'émission d'une partie des faisceaux lumineux depuis l'intérieur de la branche intermédiaire 20 vers l'extérieur. La surface d'émission 200 de la branche intermédiaire 20 s'étend entre les zones de liaison 201, 202.

Selon un premier mode de réalisation, non illustré, ces faisceaux sont directement visibles de l'extérieur.

Comme illustré aux figures 3 et 4, selon un autre mode de réalisation avantageux de l'invention, le dispositif lumineux comprend en outre un raccord émetteur de lumière 30. Le raccord émetteur de lumière 30 est par exemple composé de la même matière. Le raccord émetteur de lumière 30 est destiné à être assemblé ou emboité au guide de lumière 1, ici de manière amovible. Le raccord émetteur de lumière 30 est conçu pour être alimenté en lumière, c'est-à-dire en faisceaux lumineux, par la branche intermédiaire 20 ainsi que par la branche principale 10.

En variante, le raccord émetteur de lumière 30 peut être issu de matière avec le guide de lumière 1. Le raccord émetteur de lumière 30 peut par exemple fonctionner comme un autre guide de lumière.

Le raccord émetteur de lumière 30 comprend deux extrémités 31, 32 et s'étend longitudinalement de l'une à l'autre. Il est destiné à être agencé entre deux zones de la branche principale 10, dites zones de raccordement 301, 302. Les zones de raccordement 301, 302 sont situées à distance l'une de l'autre. Les zones de raccordement 301, 302 de la branche principale 10 sont situées toutes deux au niveau de la surface latérale 100 de la branche principale 10.

En particulier, les zones de raccordement 301, 302 sont situées entre les zones de liaison 201, 202 suivant la direction principale d'extension longitudinale de la branche principale 10. Les zones de raccordement 301, 302 sont donc distinctes des extrémités libres 101, 102 de la branche principale 10 du guide de lumière 1.

En particulier, le raccord émetteur de lumière 30 est conçu de sorte que ses extrémités 31, 32 soient agencées au niveau des zones de raccordement 301, 302 lorsque le raccord émetteur de lumière 30 est assemblé au guide de lumière 1. Autrement dit, chacune des extrémités 31, 32 du raccord émetteur de lumière 30 est conçue pour s'emboiter à la branche principale 10 au niveau de l'une des zones de raccordement 301, 302.

Le raccord émetteur de lumière 30 est conçu pour être assemblé à proximité de la branche intermédiaire 2 et de manière sensiblement parallèle à celle-ci, en suivant un même rayon de courbure. Ici, la branche intermédiaire 20 et le raccord émetteur de lumière 30 sont séparés l'un de l'autre par un espace ou une fente 6.

Le raccord émetteur de lumière 30 présente ici une surface d'émission 300 et une surface de réception 303. La surface d'émission 300 et la surface de réception 303 s'étendent longitudinalement. Elles s'étendent toutes deux d'une extrémité à l'autre du guide 30.

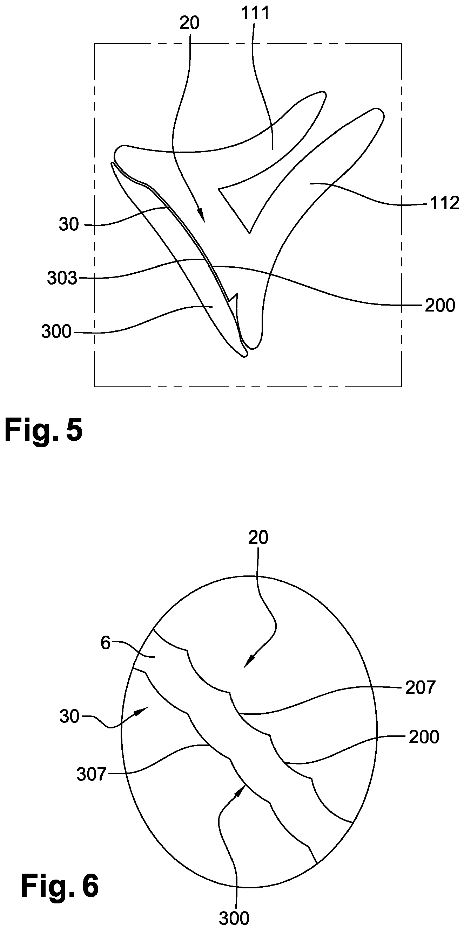

Comme illustré aux figures 5 et 6, la surface de réception 303 du raccord émetteur de lumière 30 est conçue de manière à être agencée en vis-à-vis de la branche intermédiaire 20. Autrement dit, la surface de réception 303 est conçue de manière à faire face à la branche intermédiaire 20 lorsque le raccord émetteur de lumière 30 est assemblé au guide de lumière 1. La surface de réception 303 comprend avantageusement des moyens de passage 307 de la lumière. Les moyens de passage 307 sont ici agencés de manière continue et régulière d'une extrémité 31, 32 à l'autre 31, 32 du raccord émetteur de lumière 30. Les moyens de passage 307 sont conçus de manière à permettre un passage des faisceaux lumineux entre la branche intermédiaire 20 et le raccord émetteur de lumière 30. Il s'agit par exemple de prismes toriques et/ou de motifs de réflexion.

La surface d'émission 300 du raccord émetteur de lumière 30 est conçue pour permettre un passage d'une partie au moins des faisceaux lumineux depuis l'intérieur du raccord émetteur de lumière 30 vers l'extérieur de celui-ci. De la sorte, le raccord émetteur de lumière est conçu de manière à émettre de la lumière sur toute sa longueur, d'une zone de raccordement 301, 302 à l'autre 301, 302.

La branche intermédiaire 20 est conçue de manière à permettre un guidage d'une partie des faisceaux lumineux depuis la branche principale 10 jusqu'audit raccord émetteur de lumière 30. En particulier, la branche intermédiaire 20 permet un guidage d'une partie des faisceaux lumineux vers et jusqu'aux moyens de passage 307 du raccord émetteur de lumière 30.

A cet effet, la branche intermédiaire 20 comprend ici la surface d'émission 200, agencée en vis-à-vis avec le raccord émetteur de lumière 30. En particulier, ladite surface d'émission 200 de la branche intermédiaire 20 est agencée en vis-à-vis des moyens de passage 307 de la surface de réception 303 du raccord émetteur de lumière 30. La surface d'émission 200 est ici sensiblement plane et configurée pour favoriser le passage de faisceaux lumineux entre la branche intermédiaire 20 et le raccord émetteur de lumière 30.

Avantageusement, pour la bonne propagation des faisceaux lumineux de l'une à l'autre, la branche intermédiaire 20 et ledit raccord émetteur de lumière 30 sont séparés l'un de l'autre par l'espace 6, situé entre la surface d'émission 200 de la branche intermédiaire 20 et la surface de réception 303 du raccord émetteur de lumière 30, lorsque ce dernier est assemblé au guide de lumière 1.

La portion émettrice 105 de la branche principale 10 correspond à la partie de la branche principale 10 s'étendant de l'une à l'autre des zones de raccordement 301, 302. Comme évoqué précédemment, la portion émettrice 105 est conçue pour émettre des faisceaux lumineux depuis l'intérieur de la branche principale 10 vers l'extérieur de celle-ci.

La portion émettrice 105 de la branche principale 10 ainsi que la branche intermédiaire 20 comprennent ici des moyens de réflexion. Lesdits moyens de réflexion sont par exemple des prismes et/ou des motifs de réflexion.

Les moyens de réflexion sont conçus et agencés de sorte qu'une partie des faisceaux lumineux puissent se réfléchir sur les moyens de réflexion. La réflexion de ces faisceaux lumineux sur les moyens de réflexion permet leur sortie du guide de lumière 1.

Les moyens de réflexion de la branche principale 10 sont agencés de manière continue et régulière le long de la portion émettrice 105, au niveau de la surface latérale 100 de la branche principale 10.

Les moyens de réflexion 207 de la branche intermédiaire 20 sont eux agencés au niveau de sa surface d'émission 200. Ils sont avantageusement conçus en relief par rapport à celle-ci, ce qui facilite notamment la conception d'un moule servant à la fabrication du guide de lumière 1.

De même, le raccord émetteur de lumière 30 pourra comprendre avantageusement des moyens de réflexion, au niveau de sa surface d'émission 300 et/ou au niveau de sa surface de réception 303.

Le dispositif lumineux est ainsi conçu de manière à émettre des faisceaux lumineux le long de la portion émettrice 105 de la branche principale 10 ainsi que le long dudit raccord émetteur de lumière 30, au niveau de sa surface d'émission 300. L'ensemble composé de la portion émettrice 105 et du raccord émetteur de lumière 30 est appelé partie illuminée du dispositif lumineux. Avantageusement, la partie illuminée s'étend ici sensiblement parallèlement à un plan P. Elle dessine ici une boucle ou tore fermé nonobstant l'assemblage du raccord émetteur de lumière 30 sur le guide de lumière 1. En particulier, la partie illuminée du dispositif lumineux présente par exemple une forme sensiblement circulaire.

Grâce à l'invention, le dispositif lumineux est apte à émettre des faisceaux lumineux sans discontinuité le long de la partie illuminée.

A cet effet, notamment, le raccord émetteur de lumière 30 est conçu de sorte que les extrémités 31, 32 du raccord émetteur de lumière 30 et la branche principale 10 puissent coopérer mécaniquement l'un à l'autre par complémentarité de forme de manière à permettre leur emboitement au niveau des zones de raccordement 301, 302. De la sorte, le raccord émetteur de lumière 30 est conçue pour être assemblé au guide de lumière 1 de manière à ce que la surface d'émission 300 du raccord émetteur de lumière 30 forme un prolongement de la surface latérale 100 de la branche principale 10 au niveau des zones de raccordement 301, 302.

Le dispositif lumineux pourra comprendre au moins une source de lumière, non illustrée, conçue pour émettre les faisceaux lumineux vers l'espace intérieur du guide lumière 1. En particulier, la source de lumière est notamment conçue pour émettre des faisceaux vers l'intérieur de la branche principale 10 du guide lumière 1.

La source de lumière pourra elle-même comprendre une ou plusieurs diodes électroluminescentes. La source de lumière est par exemple agencée au niveau des extrémités libres 101, 102 de la branche principale 10. Chacune des extrémités libres 101, 102 de la branche principale 10 comprend ici une surface d'entrée, la surface d'entrée étant conçue sensiblement perpendiculairement à la direction d'extension longitudinale de la branche principale 10 au niveau de ladite extrémité libre 101, 102.

Chacune des surfaces d'entrée est conçue de manière à permettre l'entrée desdits faisceaux lumineux à l'intérieur du guide de lumière 1.

La branche principale 10 comprend ici deux portions d'extrémité 111, 112. La première portion d'extrémité 111 de la branche principale 10 s'étend longitudinalement entre l'une des extrémités libres 101, 102 de la branche principale 10 et la branche intermédiaire 20. La deuxième portion d'extrémité 112 de la branche principale 10 s'étend longitudinalement entre l'autre des extrémités libres 101, 102 de la branche principale 10 et la branche intermédiaire 20.

Les portions d'extrémité 111, 112 s'étendent ici à distance l'une de l'autre. Autrement dit, les portions d'extrémités 111, 112 du guide de lumière 1 sont ici séparées l'une de l'autre par un espace.

Les portions d'extrémité 111 et 112 ne s'étendent pas nécessairement longitudinalement selon une direction parallèle au plan P. Ici, la branche principale 10 présente une portion ou zone coudée entre chacune des portions d'extrémité 111, 112 et la portion émettrice 105. Cette configuration permet par exemple de réduire l'encombrement généré par le dispositif lumineux.

Autrement dit, ici, la branche principale 10 est composée le long de sa direction principale d'extension longitudinale, successivement et dans cet ordre, de l'une des portions d'extrémité 111, 112, de l'une des zones coudées, de la portion émettrice 105, de l'autre des zones coudées et de l'autre des portions d'extrémités 111, 112.

En particulier ici, le raccord émetteur de lumière 30 et la branche intermédiaire 20 s'étendent tous deux entre les deux zones coudées de la branche principale 10. Autrement dit, les zones de raccordement 301, 302 ainsi que les zones de liaison 201, 202 sont toutes situées au niveau de l'une ou l'autre des zones coudées de la branche principale 10.

Ici, les portions d'extrémité 111, 112 s'étendent sensiblement parallèlement l'une à l'autre et forment un angle a, non nul, avec le plan P. L'angle α est par exemple un angle droit de sorte que les portions d'extrémités s'étendent longitudinalement selon une direction sensiblement orthogonale au plan P.

Les extrémités libres 101, 102, la branche intermédiaire 20 et le raccord émetteur de lumière 30 sont avantageusement traversés par un même plan P'. Autrement dit, les extrémités libres 101, 102, la branche intermédiaire 20 et le raccord émetteur de lumière 30 sont agencées de manière à être sensiblement alignés les uns par rapport aux autres de manière parallèle à la direction générale de propagation des faisceaux lumineux au niveau des portions d'extrémité 111, 112.

L'invention concerne encore une unité d'éclairage et/ou signalisation, telle qu'un projecteur, un feu arrière ou une unité de feu de signalisation diurne (DRL) comprenant un dispositif lumineux 1 tel que décrit ci-avant, par exemple associé dans un projecteur à d'autres dispositifs lumineux tels qu'un module de feux de croisement, un module de feux de route, un module d'indicateur de direction ou autres

## Revendications

1. Dispositif lumineux, notamment pour véhicule automobile, comprenant un guide de lumière (1), le guide de lumière (1) comprenant un premier élément (10), dit branche principale, et un deuxième élément (20), dit branche intermédiaire, la branche principale (10) comprenant deux extrémités libres (101, 102) et s'étendant longitudinalement d'une extrémité libre (101, 102) à l'autre (101, 102), la branche intermédiaire (20) s'étendant entre deux zones (201, 202) de la branche principale (10), dites zones de liaison, les zones de liaison (201, 202) étant à distance l'une de l'autre et distinctes des extrémités libres (101, 102) de la branche principale (10), la branche intermédiaire (20) étant jointe en continuité de matière à l'une et l'autre des zones de liaison (201, 202), **caractérisé en ce que** le dispositif lumineux comprend également un raccord émetteur de lumière (30) destiné à être agencé entre deux zones (301, 302) de la branche principale (10), dites zones de raccordement, le raccord émetteur de lumière (30) étant conçu pour s'étendre de l'une des zones de raccordement (301, 302) à l'autre zone de raccordement (301, 302), les zones de raccordement (301, 302) étant à distance l'une de l'autre et distinctes des extrémités libres (101, 102) de la branche principale (10), le raccord émetteur de lumière (30) étant conçu pour être alimenté en lumière par la branche intermédiaire (20), le raccord émetteur de lumière (30) étant conçu pour être emboité au guide de lumière (1).

2. Dispositif lumineux selon la revendication précédente dans lequel la branche principale (10) est linéaire.

3. Dispositif lumineux selon l'une quelconque des revendications précédentes dans lequel la branche intermédiaire (20) et la branche principale (10) sont issues de moulage.

4. Dispositif lumineux selon l'une quelconque des revendications précédentes, dans lequel la branche principale (10) est conçue pour alimenter en lumière la branche intermédiaire (20).

5. Dispositif lumineux selon l'une quelconque des revendications précédentes dans lequel la branche intermédiaire (20) comprend une surface d'émission (200) et des motifs de réflexion (207), les motifs de réflexion (207) étant disposés en relief à la surface d'émission (200) de la branche intermédiaire (20).

6. Dispositif lumineux selon l'une quelconque des revendications précédentes dans lequel le guide de lumière (1) est conçu pour être alimenté en lumière par au moins une source de lumière, la au moins une source de lumière étant agencée au niveau de l'une au moins des extrémités libres (101, 102) de la branche principale (10).

7. Dispositif lumineux selon l'une quelconque des revendications précédentes dans lequel le raccord émetteur de lumière (30) est linéaire.

8. Dispositif lumineux selon l'une quelconque des revendications précédentes dans lequel la branche intermédiaire (20) et le raccord émetteur de lumière (30) s'étendent sensiblement parallèlement l'un à l'autre.

9. Dispositif lumineux selon l'une quelconque des revendications précédentes dans lequel les zones de raccordement (301, 302) sont situées toutes deux entre les deux zones de liaison (201, 202) le long de la branche principale (10).

10. Dispositif lumineux selon l'une quelconque des revendications précédentes dans lequel la branche intermédiaire (20) et le raccord émetteur de lumière (30) sont séparés l'un de l'autre par un espace (6).

11. Dispositif lumineux selon l'une quelconque des revendications précédentes dans lequel la partie de la branche principale (10) s'étendant de l'une des zones de raccordement (301, 302) à l'autre zone de raccordement (301, 302), dite zone d'émission (105), et le raccord émetteur de lumière (30) définissent ensemble une boucle.

12. Dispositif lumineux selon la revendication précédente dans lequel la boucle s'étend sensiblement dans un plan P, deux parties (111, 112) de la branche principales s'étendant entre chacune des extrémités libres (101, 102) de la branche principale (10) et la branche intermédiaire (20), dites portions d'extrémité, de manière sécante au plan P.

13. Unité d'éclairage et/ou signalisation pour véhicule automobile comprenant un dispositif lumineux selon l'une quelconque des revendications précédentes.

## Patentansprüche

1. Leuchteinrichtung, insbesondere für Kraftfahrzeuge, mit einem Lichtleiter (1), wobei der Lichtleiter (1) ein erstes Element (10), den sogenannten Hauptschenkel, und ein zweites Element (20), den sogenannten Zwischenschenkel, umfasst, wobei der Hauptschenkel (10) zwei freie Enden (101, 102) aufweist und sich in Längsrichtung von einem freien Ende (101, 102) zum anderen (101, 102) erstreckt, wobei sich der Zwischenschenkel (20) zwischen zwei Zonen (201, 202) des Hauptschenkels (10) erstreckt, die Verbindungszonen genannt werden, wobei die Verbindungszonen (201, 202) voneinander beabstandet und von den freien Enden (101, 102) des Hauptschenkels (10) getrennt sind, wobei der Zwischenschenkel (20) in Kontinuität des Materials mit den beiden Verbindungszonen (201, 202) verbunden ist, **dadurch gekennzeichnet, dass**
die Leuchteinrichtung auch einen lichtemittierenden Verbinder (30) umfasst, der dazu bestimmt ist, zwischen zwei Bereichen (301, 302) des Hauptschenkels (10), den sogenannten Verbindungsbereichen, angeordnet zu werden, wobei der lichtemittierende Verbinder (30) so ausgelegt ist, dass er sich von einem der Verbindungsbereiche (301, 302) aus erstreckt, zu dem anderen Verbindungsbereich (301, 302), wobei die Verbindungsbereiche (301, 302) voneinander beabstandet und von den freien Enden (101, 102) des Hauptschenkels (10) getrennt sind, wobei der lichtemittierende Verbinder (30) dazu ausgelegt ist, über den Zwischenschenkel (20) mit Licht versorgt zu werden,
wobei der lichtemittierende Verbinder (30) so ausgelegt ist, dass er in den Lichtleiter (1) eingestellt werden kann.

2. Leuchteinrichtung nach dem vorstehenden Anspruch, bei dem der Hauptschenkel (10) linear ist.

3. Leuchteinrichtung nach einem der vorstehenden Ansprüche, bei der der Zwischenschenkel (20) und der Hauptschenkel (10) aus Guß abgeleitet sind.

4. Leuchteinrichtung nach einem der vorstehenden Ansprüche, bei der der Hauptschenkel (10) dazu bestimmt ist, Licht an den Zwischenschenkel (20) zu liefern.

5. Leuchteinrichtung nach einem der vorstehenden Ansprüche, wobei der Zwischenschenkel (20) eine Emissionsfläche (200) und Reflexionsmuster (207) aufweist, wobei die Reflexionsmuster (207) auf der Emissionsfläche (200) des Zwischenschenkels (20) reliefartig angeordnet sind.

6. Leuchteinrichtung nach einem der vorstehenden Ansprüche, bei der der Lichtleiter (1) dazu bestimmt ist, von mindestens einer Lichtquelle mit Licht versorgt zu werden, wobei die mindestens eine Lichtquelle an mindestens einem der freien Enden (101, 102) des Hauptschenkels (10) angeordnet ist.

7. Leuchteinrichtung nach einem der vorstehenden Ansprüche, bei der die lichtemittierende Verbindung (30) linear ist.

8. Leuchteinrichtung nach einem der vorstehenden Ansprüche, bei der der Zwischenschenkel (20) und die lichtemittierende Verbindung (30) im Wesentlichen parallel zueinander verlaufen.

9. Leuchteinrichtung nach einem der vorstehenden Ansprüche, bei der die Verbindungsbereiche (301, 302) beide zwischen den beiden Verbindungszonen (201, 202) entlang des Hauptschenkels (10) liegen.

10. Leuchteinrichtung nach einem der vorstehenden Ansprüche, bei der der Zwischenschenkel (20) und die lichtemittierende Verbindung (30) durch einen Spalt (6) voneinander getrennt sind.

11. Leuchteinrichtung nach einem der vorstehenden Ansprüche, bei der der Teil des Hauptabschenkels (10), der sich von einer der Verbindungszonen (301, 302) zur anderen Verbindungszone (301, 302) erstreckt, die als Emissionszone (105) bezeichnet wird, und die lichtemittierende Verbindung (30) zusammen eine Schleife definieren.

12. Leuchtvorrichtung nach dem vorhergehenden Anspruch, bei der sich die Schleife im wesentlichen in einer Ebene P erstreckt, wobei sich zwei Teile (111, 112) des Hauptschenkels zwischen jedem der freien Enden (101, 102) des Hauptschenkels (10) und des Zwischenschenkels (20), die als Endabschnitte bezeichnet werden, in einer Weise erstrecken, die die Ebene P schneidet.

13. Eine Beleuchtungs- und/oder Signalgebungseinheit für ein Kraftfahrzeug mit einer Leuchtvorrichtung nach einem der vorstehenden Ansprüche.

## Claims

1. A luminous device, in particular for a motor vehicle, comprising a light guide (1), the light guide (1) comprising a first element (10), referred to as the main branch, and a second element (20), referred to as the intermediate branch, the main branch (10) comprising two free ends (101, 102) and extending longitudinally from one free end (101, 102) to the other (101,102), the intermediate branch (20) extending between two zones (201, 202) of the main branch (10), called connection zones, the connection zones (201, 202) being at a distance from each other and distinct from the free ends (101, 102) of the main branch (10), the intermediate branch (20) being joined in continuity of material to both of the connection zones (201, 202), **characterized in that**
the luminous device also comprises a light-emitting connector (30) intended to be arranged between two areas (301, 302) of the main branch (10), called connection areas, the light-emitting connector (30) being designed to extend from one of the connection areas (301), 302) to the other connection region (301, 302), the connection regions (301, 302) being spaced apart from one another and separate from the free ends (101, 102) of the main branch (10), the light-emitting connection (30) being designed to be supplied with light via the intermediate branch (20),
the light-emitting connector (30) being designed to be fitted on the light guide (1).

2. A luminous device according to the preceding claim in which the main branch (10) is linear.

3. A luminous device according to any one of the preceding claims in which the intermediate branch (20) and the main branch (10) are moulded.

4. A luminous device according to any of the preceding claims, wherein the main branch (10) is designed to supply light to the intermediate branch (20).

5. A luminous device according to any one of the preceding claims wherein the intermediate branch (20) comprises an emission surface (200) and reflection patterns (207), the reflection patterns (207) being arranged in relief on the emission surface (200) of the intermediate branch (20).

6. A luminous device according to any of the preceding claims wherein the light guide (1) is designed to be supplied with light by at least one light source, the at least one light source being arranged at at least one of the free ends (101, 102) of the main branch (10).

7. A luminous device according to any of the preceding claims in which the light emitting connection (30) is linear.

8. A luminous device according to any of the preceding claims in which the intermediate branch (20) and the light-emitting connection (30) extend substantially parallel to each other.

9. A luminous device according to any of the preceding claims in which the connecting areas (301, 302) are both located between the two connecting areas (201, 202) along the main branch (10).

10. A luminous device according to any of the preceding claims in which the intermediate branch (20) and the light-emitting connection (30) are separated from each other by a gap (6).

11. A luminous device according to any one of the preceding claims in which the part of the main branch (10) extending from one of the connection zones (301, 302) to the other connection zone (301, 302), referred to as the emission zone (105), and the light-emitting connection (30) together define a loop.

12. A luminous device according to the preceding claim in which the loop extends substantially in a plane P, two parts (111, 112) of the main branch extending between each of the free ends (101, 102) of the main branch (10) and the intermediate branch (20), referred to as end portions, in a manner intersecting the plane P.

13. A lighting and/or signalling unit for a motor vehicle comprising a luminous device according to any of the foregoing claims.
